Europäisches Patentamt

European Patent Office

Office européen des brevets

(19)

(11) Numéro de publication : **0 022 385**
**B1**

(12)

# FASCICULE DE BREVET EUROPÉEN

(45) Date de publication du fascicule du brevet :
01.09.82

(21) Numéro de dépôt : **80400844.9**

(22) Date de dépôt : **11.06.80**

(51) Int. Cl.³ : **C 09 C   1/54// B22C3/00,
C03B40/02, B29C1/04,
B29H21/04**

(54) **Dispositif et procédé de production de noir de carbone par combustion aéroacétylénique incomplète.**

(30) Priorité : **03.07.79 FR 7917173**

(43) Date de publication de la demande :
**14.01.81 (Bulletin 81/02)**

(45) Mention de la délivrance du brevet :
**01.09.82 Bulletin 82/35**

(84) Etats contractants désignés :
**AT BE CH DE FR GB IT LI LU NL SE**

(56) Documents cités :
**FR - A - 973 433
US - A - 3 748 082**

(73) Titulaire : **L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cedex 07 (FR)**

(72) Inventeur : **Nicolas, Jacques
8, rue Alasseur
F-75015 Paris (FR)**
Inventeur : **Berger, Antoine
Chemin du Port Durand
F-44000 Nantes (FR)**
Inventeur : **Laminette, Christian
11, rue Allard Dugauquier
F-59000 Lille (FR)**

(74) Mandataire : **Liboz, André et al.
L'AIR LIQUIDE SOCIETE ANONYME POUR L'ETUDE
ET L'EXPLOITATION DES PROCEDES GEORGES
CLAUDE 75, Quai d'Orsay
F-75321 Paris Cedex 7 (FR)**

Imprimerie Jouve, 18, rue St-Denis, 75001 Paris, France

Dispositif et procédé de production de noir de carbone par combustion aéroacétylénique incomplète

La présente invention a essentiellement pour objet la production de noir de carbone par une réaction de combustion aéroacétylénique incomplète.

Le noir de carbone a de nombreuses applications industrielles en raison de ses propriétés de lubrifiant et d'isolant thermique. C'est ainsi qu'il est utilisé en particulier en métallurgie comme agent de poteyage des moules, lingotières, coquilles ou analogues dans lesquels on coule un métal en fusion.

Toutefois le noir de carbone produit par les dispositifs actuellement connus, qui utilisent la combustion incomplète de l'acétylène dans l'air, est de qualité médiocre, ce qui est préjudiciable à certaines utilisations industrielles déjà connues et empêche l'extension de son utilisation à d'autres industries.

C'est ainsi, par exemple, que la granulométrie de ce noir de carbone, qui est fonction du rapport air/$C_2H_2$, est difficilement maîtrisable, qu'il présente une consistance grasse et que les dépôts formés sur les moules métallurgiques ont une épaisseur non homogène, ce qui entraîne une inégalité de son pouvoir lubrifiant et de ses propriétés d'isolant thermique.

De plus, ce noir de carbone obtenu avec les dispositifs connus, contient des hydrocarbures aromatiques, tels que le benzène et le naphtalène qui adhèrent aux parois des moules ou analogues et rendent difficile leur nettoyage ultérieur. Ces carbures aromatiques agissent comme liant pour les granules et donnent au noir de carbone une consistance floconneuse.

Enfin, le fonctionnement des dispositifs connus de production de noir de carbone est souvent perturbé par les dépôts de goudrons sur les conduits d'amenée d'air et d'acétylène.

Le brevet US-A-3 748 082 décrit un procédé pour le craquage et la combustion d'hydrocarbures, ce procédé étant mis en œuvre au moyen d'un dispositif qui comporte une chambre de mélange alimentée en comburant et en combustible, deux tubes concentriques disposés axialement à la chambre, le tube interne étant alimenté en combustible secondaire et l'espace entre les deux tubes en comburant riche en oxygène. Un obstacle est prévu à l'extrémité des tubes concentriques pour recycler en partie le mélange. Le but de ce procédé connu est d'augmenter la quantité de carbone produit, ce qui augmente la température de la flamme et la quantité de noir de carbone obtenu et non la qualité du noir de carbone, en particulier les qualités lubrifiantes de ce noir de carbone, permettant son utilisation comme agent de poteyage.

La présente invention a pour but d'éviter les inconvénients susmentionnés et propose, à cet effet, un dispositif qui comporte un orifice éjecteur délivrant l'acétylène sous forme d'un jet, une pluralité de becs ou orifices chauffants disposés autour de l'orifice éjecteur et des moyens pour alimenter les becs ou orifices chauffants en un mélange comburant-combustible dont la combustion atteint la température de craquage thermique des molécules d'acétylène.

Le fait que l'acétylène se présente sous forme d'un jet traversant les flammes issues des becs chauffants permet un craquage des molécules d'acétylène préalablement à leur combustion. Ce craquage présente de nombreux avantages ; le noir de carbone obtenu présente, par rapport aux produits antérieurs, une granulométrie plus fine et beaucoup plus régulière ; il est, de plus, pratiquement exempt de carbures benzéniques et ne forme pratiquement pas de goudrons susceptibles de perturber l'écoulement des gaz. Il en résulte que l'on peut obtenir, sur les moules de métallurgie, des poteyages homogènes de haute qualité lubrifiante et isolante et ne présentant aucune adhérence susceptible de gêner le nettoyage desdits moules.

Selon une autre caractéristique de l'invention, les becs ou orifices chauffants précités sont répartis selon un cercle centré sur l'orifice éjecteur précité.

Les becs chauffants forment ainsi une couronne de chauffe qui entoure le jet d'acétylène et assure les meilleures conditions de transfert de chaleur.

Toujours selon l'invention, le dispositif comporte des moyens de pilotage de la délivrance du jet d'acétylène par ledit orifice éjecteur.

Ces moyens de pilotage permettent de former des couches de noir de carbone à l'instant désiré, en des endroits désirés et en quantité souhaitée. Ils permettent également des injections séquentielles d'acétylène, donc de dépôts séquentiels de noir de carbone, ce qui rend le dispositif particulièrement bien adapté aux installations automatiques de moulage, par exemple dans lesquelles les moules, montés sur un convoyeur rotatif ou translatif, sont remplis à tour de rôle de métal en fusion.

D'autres caractéristiques et avantages de l'invention apparaîtront au cours de la description qui va suivre.

Dans les dessins annexés, donnés à titre d'exemple, non limitatif :

La figure 1 montre, de façon schématique et en coupe axiale, un dispositif selon un premier mode de réalisation de l'invention.

La figure 2 est une vue en bout de dessous de la figure 1, montrant le nez dudit dispositif.

La figure 3 est également une vue en bout d'une première variante du dispositif selon l'invention.

La figure 4 montre, de façon schématique et en coupe axiale, un troisième mode de réalisation de l'invention.

La figure 5 est une vue en bout de dessous de la figure 4.

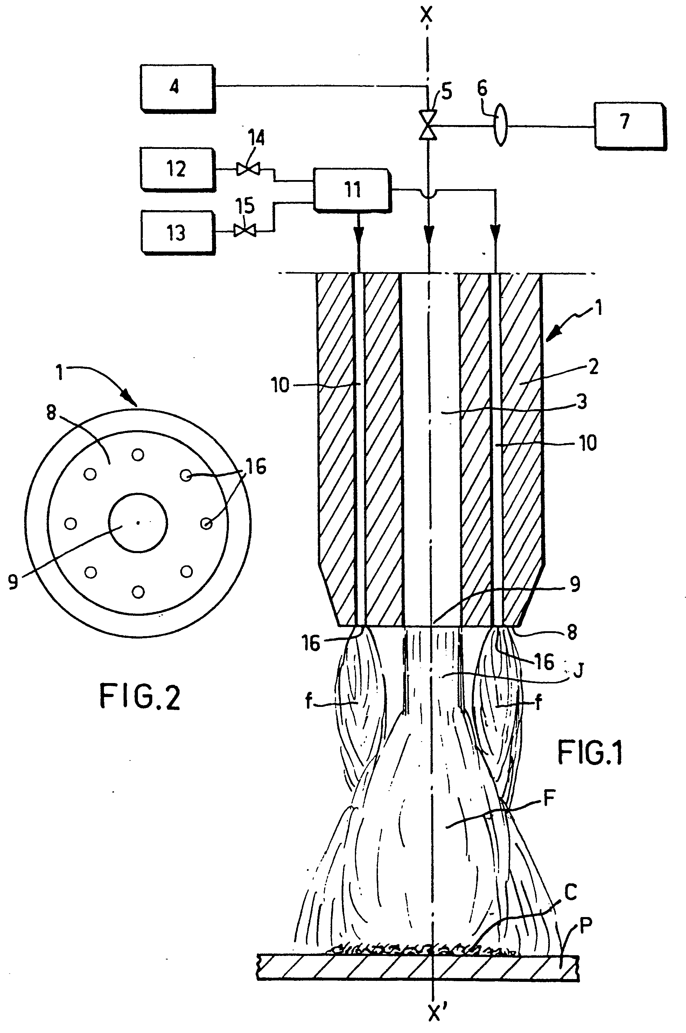

Selon le mode de réalisation représenté aux figures 1 et 2, le dispositif pour la production de noir de carbone, désigné d'une façon générale par la référence 1, comporte un corps creux 2 de révolution XX' muni, intérieurement, d'un conduit central 3 alimenté en acétylène par une source sous pression 4 à laquelle il est relié par l'intermédiaire d'une vanne d'admission 5, pilotée par un organe pneumatique 6 relié lui-même à une source d'air comprimé 7. Le conduit 3 débouche à la partie antérieure ou nez 8 du corps 2 par un orifice éjecteur central 9 qui délivre un jet J d'acétylène. Le dispositif est muni de moyens de chauffage dudit jet d'acétylène J constitué par une pluralité de conduits 10 logés à l'intérieur du corps 2 et répartis circulairement et régulièrement autour du conduit central 3. Chacun de ces conduits périphériques 10 est alimenté en un mélange comburant-combustible (par exemple, oxygène-méthane ou oxygène-éthane) par un mélangeur 11 lui-même relié à des sources 12 et 13 (respectivement de comburant et de combustible) par l'intermédiaire de deux vannes de réglage 14 et 15. Chacun des conduits 10 débouche à la partie antérieure 8 du corps 2 par un orifice ou bec chauffant 16, ces orifices ou becs formant, sur ladite partie 8, une couronne de chauffe circulaire centrée sur l'orifice éjecteur 9, c'est-à-dire d'axe XX'. En fonctionnement, les flammes de combustion du mélange comburant-combustible à la sortie des orifices 16, forment une couronne de chauffe qui entoure le jet d'acétylène J. Le mélange comburant-combustible est réglé dans le rapport stœchiométrique de façon que la température de la couronne de chauffe soit de l'ordre de 1 400 °C. A cette température, les molécules d'acétylène du jet J sont soumises, à leur sortie de l'orifice 9, à un craquage thermique, préalablement à la réaction de combustion incomplète dans l'air qui se produit ultérieurement en donnant naissance à une flamme de combustion principale F. Les débits de méthane (ou d'éthane) aux becs 16 et d'acétylène à l'éjecteur 9 sont réglés de façon qu'à 1 mole d'acétylène corresponde 0,75 mole de méthane (ou d'éthane).

La flamme principale F donne lieu, lorsqu'elle est appliquée sur la paroi P d'un moule par exemple, au dépôt d'une couche de noir de carbone C qui présente une granulométrie fine et constante et qui est pratiquement exempte de carbures d'hydrocarbures aromatiques, de sorte que ce noir de carbone n'adhère pas aux parois des moules et ne présente pas une consistance floconneuse.

La couronne de chauffe peut être allumée en permanence tandis que l'acétylène peut être éjecté par séquences successives par l'orifice 9 au moyen de la vanne à commande pneumatique 5, ce qui permet d'obtenir des projections séquentielles de noir de carbone à des instants désirés, et rend le dispositif particulièrement intéressant pour équiper des installations automatiques de moulage par exemple.

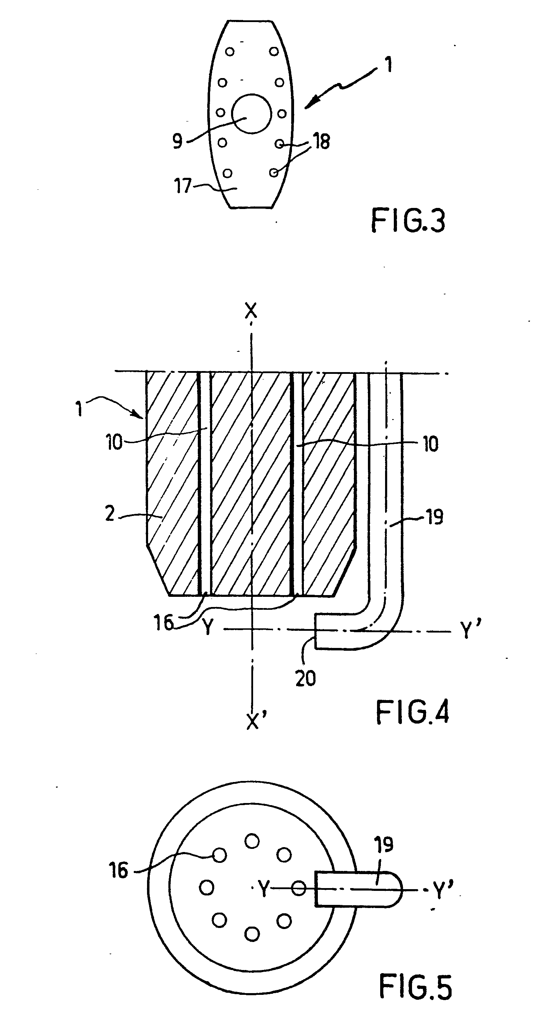

Dans la variante de réalisation de la figure 3, dans laquelle les mêmes chiffres désignent les mêmes éléments que dans les figures 1 et 2, le dispositif représenté se distingue du précédent par la forme de sa partie antérieure 17 qui est allongée et non plus circulaire et par la répartition des becs 18 qui, contrairement aux becs 16, sont alignés de part et d'autre de l'éjecteur 9. Il en résulte la formation d'un double rideau de chauffe enveloppant le jet d'acétylène.

Dans la variante de réalisation des figures 4 et 5, dans lesquelles les mêmes références désignent également les mêmes éléments que dans les figures 1 et 2, le conduit d'acétylène 19 et l'éjecteur 20 ne sont plus coaxiaux à l'axe XX' mais l'éjecteur 20 a son axe YY' perpendiculaire à XX', de sorte que le jet d'acétylène traverse radialement la couronne de chauffe.

La haute qualité du noir de carbone obtenu avec le dispositif selon l'invention permet son emploi comme agent de poteyage, non seulement des moules ou lingotières de métallurgie, mais également de moules de verrerie, de moules servant à la fabrication d'articles en caoutchouc ou en matières plastiques, etc. Il peut être employé également comme revêtement isolant pour des cylindres ou des chaînes de convoyage supportant des produits à haute température en évitant ainsi l'apparition d'un choc thermique. Ce noir de carbone peut être substitué aux lubrifiants usuels (huiles ou savons) pour les têtes de tréfilage.

**Revendications**

1. Dispositif de production de noir de carbone par une réaction de combustion aéroacétylénique incomplète, caractérisé en ce qu'il comporte un orifice éjecteur (9 ; 20) délivrant l'acétylène sous forme d'un jet, une pluralité de becs ou orifices chauffants (16 ; 18) disposés autour de l'orifice éjecteur (9 ; 20) et des moyens (11-15) pour alimenter les becs ou orifices chauffants en un mélange comburant-combustible dont la combustion atteint la température de craquage thermique des molécules d'acétylène.

2. Dispositif selon la revendication 1, caractérisé en ce que les becs ou orifices chauffants (16) sont répartis selon un cercle centré sur l'orifice éjecteur précité (9) (fig. 3).

3. Dispositif selon la revendication 1, caractérisé en ce que les becs ou orifices chauffants (18) sont alignés de part et d'autre de l'orifice éjecteur (9) de façon à former deux arcs (fig. 3).

4. Dispositif selon la revendication 1, caractérisé en ce que les becs ou orifices chauffants (16) sont répartis selon un cercle d'axe (XX') perpendiculaire à l'axe (YY') dudit orifice éjecteur (20) (fig. 4).

5. Dispositif selon la revendication 1, caractérisé en ce qu'il comporte des moyens de pilotage (5-6) de la délivrance du jet d'acétylène par ledit orifice éjecteur (9).

6. Dispositif selon la revendication 7, caractérisé en ce que les moyens de pilotage précités comportent une vanne (5) à commande pneumatique.

7. Procédé de production de noir de carbone par une réaction de combustion aéroacétylénique incomplète, caractérisé en ce qu'il consiste à délivrer l'acétylène sous forme d'un jet et à faire traverser audit jet, avant qu'ait lieu ladite réaction de combustion, une zone de chauffe ayant une température provoquant le craquage thermique préalable des molécules d'acétylène.

## Claims

1. Apparatus for producing carbon black by an incomplete air-acetylene combustion reaction, characterized by that it comprises an ejecting orifice (9 ; 20) delivering acetylene in form of a jet, a plurality of heating nozzles or orifices (16 ; 18) disposed around the ejecting orifice (9 ; 20) and means (11-15) for supplying the heating nozzles or orifices with a mixture combustion agent-combustible, a combustion of which reaches the thermal cracking temperature of acetylene molecules.

2. Apparatus according to claim 1, characterized by that the nozzles or heating orifices (16) are distributed along a cercle centered to the afore-mentioned ejecting orifice (9) (fig. 2).

3. Apparatus according to claim 1, characterized by that the nozzles or heating orifices (18) are arranged on both sides of the ejecting orifice (9) such that they form two arcs (fig. 3).

4. Apparatus according to claim 1, characterized by that the heating nozzles or heating orifices (16) are distributed according to a cercle with an axis (XX') perpendicular to the axis (YY') of the ejecting orifice (20) (fig. 4).

5. Apparatus according to claim 1, characterized by that it comprises pilot means (5-6) to deliver the acetylene jet through the said ejecting orifice (9).

6. Apparatus according to claim 7, characterized by that the afore-mentioned pilot means comprise a valve (5) having pneumatic command.

7. Method for producing carbon black by an incomplete air-acetylene combustion reaction characterized by that it consists of delivering acetylene in form of a jet and having it traversing the said jet before the combustion reaction takes place, whereby the heating zone has a temperature causing the previous thermal cracking of the acetylene molecules.

## Ansprüche

1. Vorrichtung zur Erzeugung von Ruß durch eine unvollständige Luft-Acetylen-Verbrennungsreaktion, dadurch gekennzeichnet, daß sie eine Ausstoßöffnung (9 ; 20) aufweist, die Acetylen in Form eines Strahles liefert, eine Mehrzahl von Heizmundstücken oder Heizöffnungen (16 ; 18) aufweist, welche um die Ausstoßöffnung (9 ; 20) angeordnet sind, und Mittel (11, 15) aufweist zum Versorgen der Heizmundstücke oder Heizöffnungen mit einem Gemisch Verbrennungsmittel-Brennstoff, dessen Verbrennung die Thermische Kracktemperatur von Acetylenmolekülen erreicht.

2. Vorrichtung nach Anspruch 1, dadurch gekennzeichnet, daß die Heizmundstücke oder Heizöffnungen (16) gemäß einem Kreis verteilt sind, der auf die vorgenannte Ausstoßöffnung (9) zentriert ist (Fig. 2).

3. Vorrichtung nach Anspruch 1, dadurch gekennzeichnet, daß die Heizmundstücke oder Heizöffnungen (18) beiderseits der Ausstoßöffnung (9) derart angeordnet sind, daß sie zwei Bögen formen (Fig. 3).

4. Vorrichtung nach Anspruch 1, dadurch gekennzeichnet, daß die Heizmundstücke oder Heizöffnungen (16) gemäß einem Kreis verteilt angeordnet sind, wobei seine Achse (XX') senkrecht zur Achse (YY') der Ausstoßöffnung (20) liegt (Fig. 4).

5. Vorrichtung nach Anspruch 1, dadurch gekennzeichnet, daß Steuermittel (5-6) vorgesehen sind für die Abgabe des Acetylenstrahles durch die Ausstoßöffnung (9).

6. Vorrichtung nach Anspruch 7, dadurch gekennzeichnet, daß die genannten Steuermittel ein Ventil (5) mit pneumatischer Steuerung aufweisen.

7. Verfahren zur Erzeugung von Ruß durch eine unvollständige Luft-Acetylen-Verbrennungsreaktion, dadurch gekennzeichnet, daß Acetylen in Form eines Strahles zugeführt wird, den man eine Heizzone durchqueren läßt, bevor die Verbrennungsreaktion stattfindet, wobei die Heizzone eine Temperatur hat, welche das vorhergehende thermische Kracken der Acetylenmoleküle hervorruft.

FIG.2

FIG.1

0 022 385

FIG.3

FIG.4

FIG.5